# EUROPEAN PATENT SPECIFICATION

(11) **EP 1 975 904 B1**
(45) Date of publication and mention of the grant of the patent: **09.07.2014**
(21) Application number: 08250395.4
(22) Date of filing: 01.02.2008
(51) Int. Cl.: G09B 19/02

(54) **Mathematical apparatus**
Mathematische Vorrichtung
Appareil mathématique

(30) Priority: 23.03.2007 GB 0705545; 17.04.2007 GB 0707329; 25.06.2007 GB 0712229
(43) Date of publication of application: 01.10.2008
(73) Proprietor: Kyffin, Irene, 22 Abbey Road, St. John's Wood London NW8 9DN (GB)
(72) Inventor: Kyffin, Irene, 22 Abbey Road, St. John's Wood London NW8 9DN (GB)
(74) Representative: Somervell, Thomas Richard

(56) References cited:
- GB-A- 758 251
- US-A- 802 807
- US-A- 2 965 980
- US-A- 3 541 707
- US-A- 4 360 347
- US-A- 5 772 209
- US-B1- 6 619 661

## Description

The present invention relates to mathematical apparatus and more particularly to a mathematical apparatus which can be used to visualise numerical relationships.

There are a number of known methods of displaying a visual representation of numbers, such as tables, graphs, or the like such that a viewer can see a relationship between numbers without having to mathematically determine that relationship (see US-A-4360347; US-A-5772209; GB-A-758251).

Such examples are particularly useful as teaching aids since students will not typically have a prior understanding of the relevant underlying mathematical principles. Thus it is often difficult for students to accept purely conceptual numerical principles and a teacher will typically have much greater success in explaining those mathematical principles if the students are able to visualise the relevant numerical relationships. However it will be appreciated that such aids are not limited solely to teaching and may prove to be useful in any situation in which numerical relationships are to be determined.

Over recent years there has been significant development in the appreciation of differing learning styles. For example, many children are unable to learn or readily comprehend sequences of numbers expressed in a conventional linear fashion. If this difficulty is overlooked, those children may come to the conclusion that they are unable to fully understand basic mathematical principles and will struggle with numeracy for the rest of their lives.

Furthermore there is greater understanding of learning styles which are best suited to individuals. Basic learning styles can be generally categorised as auditory, visual and kinesthetic. An individual will typically favour one learning style whilst feeling less comfortable with one or more other styles. Thus if a mathematical relationship is disclosed verbally to a predominantly kinesthetic learner, they may struggle with the concept, whereas they may find the concept straightforward if they were given the opportunity to determine the concept for themselves by way of a workbook or any other manual task.

It is an aim of the present invention to provide a mathematical apparatus which disseminates numerical relationships to a user in a manner which is sympathetic to multiple learning styles.

According to a first aspect of the present invention there is provided a mathematical apparatus for the dissemination of numerical relationships, said apparatus comprising a substantially planar body having a plurality of numerals on a first surface thereof, said numerals being positioned and oriented so as to define a plurality of radially aligned numerical sequences, the numerals in each radial sequence extending from a point within said surface towards a peripheral edge of said surface, wherein the numerals within each radial sequence are spaced in correspondence with the numeral spacings in an adjacent radial sequence so as to define a plurality of concentric annularly aligned numerical sequences arranged about said point on said surface.

The present invention is particularly advantageous since the radially aligned numbers show a linear sequence, whereas the numbers in any given ring show a global sequence. A global sequence may be described as a sequence of characters which runs in a annular, ring-shaped direction. The present invention is particularly advantageous in that the radial sequences can be aligned such that a continuous annular sequence can be established simultaneously.

The invention overcomes the limitations associated with the reading of solely linear number sequences by providing an apparatus which can display the same numerical sequences in both linear and global arrangements simultaneously. Thus a sequence of numbers which is shown in a linear arrangement can also be repeated on the same surface in a global arrangement, allowing diverse ways of reading the same sequence.

A mathematical apparatus according to the present invention may find numerous uses, for example as a teaching, learning or revision aid; as a calculation aid for multiplication, division, addition or subtraction; as an aid for advanced mathematical calculations or else as an aid for use in a game, such as for example a mental game of skill or else a board game.

In one embodiment, the numerical sequences take the form of multiplication or addition sequences, often referred to as 'times tables'. Thus each radial and annular sequence may show a times table for one numeral. In this way, the apparatus can be used to show multiple times tables.

In one embodiment, the body surface comprises a plurality of annular and/or radial delineations. The radial delineations may be interposed between adjacent radial numerical sequences and the annular delineations may be interposed between adjacent annular numerical sequences. The delineations may define a series of adjoining areas on said surface which may take the form of a series of concentric rings and/or a series of wedge shapes. This has the benefit that the annular and/or radial numerical sequences are easy to appreciate and can therefore assist visual learners.

The delineations may take the form of adjoining areas of different colours and/or lines marked on the surface. In one embodiment adjacent areas are marked using different colours or patterns which may be printed on the body surface.

According to one embodiment the body is formed of a plurality of members which may be assembled in a coplanar arrangement to form said body. Thus the body may be disbandable. The individual members may be annular or wedge-shaped such that individual rings or wedges are removable from the body. In one embodiment, the removable members have a single numerical sequence displayed thereon. This is of significant benefit when the device is used as a mathematical aid since a user can remove and handle individual numerical sequences. This can help kinaesthetic learners since it provides a tactile aspect to the use of the device.

In one embodiment, the apparatus further comprises a housing in which the body is received. The body may be removable from the housing. The housing may comprise a tray-like structure having a base and one or more walls extending upwardly therefrom. The housing may comprise a lid portion. The lid portion may have an aperture or window therein and may be rotatable relative to the base. Thus the lid can be rotated such that the aperture aligns with a portion of the body. The window may be wedge shaped or otherwise shaped to reveal a numerical sequence to the user, whilst the lid covers the remainder of the body.

The body may have numerals and or areas according to the present invention provided on both a first and second surface thereof. The first and second faces may be opposing major faces of the planar body.

According to a second aspect of the present invention there is provided a mathematical apparatus for the display of numerical relationships, said apparatus comprising a substantially planar assembly having a plurality of circumferential delineations defining a series of concentric rings on at least a first major surface thereof and a plurality of radial delineations defining a series of wedge shapes on said surface, the combined circumferential and radial delineations defining a plurality of adjoining areas on said surface, wherein each adjoining area has a number therein, said numbers defining at least one radially aligned numerical sequence and one circumferentially aligned numerical sequence, and wherein either of the circumferential or radial delineations comprise a discontinuity between adjacent ring or wedge sections respectively such that individual rings or wedges are removable from the assembly.

Preferable embodiments of the present invention are described in further detail below with reference to the accompanying drawings, of which:
Figure 1 shows a plan view of a mathematical apparatus according to one embodiment of the present invention;
Figure 2 shows one area of the apparatus of figure 1;
Figure 3 shows a further area of the apparatus of figure 1;
Figure 4 shows a three-dimensional view of the structural features of a mathematical apparatus according to a second embodiment of the present invention;
Figure 5 shows a three-dimensional view of the structural features of a mathematical apparatus according to a third embodiment of the present invention; and,
Figure 6 shows a housing for the mathematical apparatus.

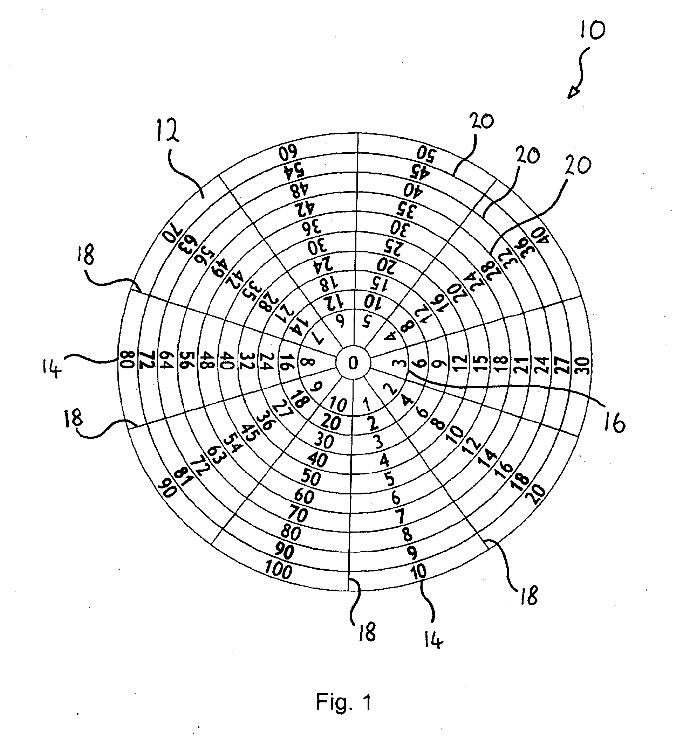

Turning firstly to figure 1, there is shown a mathematical apparatus 10 comprising a planar body 12 which is circular in plan. In this embodiment, the body 12 is generally disc shaped, such that it comprises two opposing major surfaces and a peripheral surface therebetween. The depth of the body is typically less than half the radius of the major surfaces. In figure 1, one major surface of the body is shown.

The body may be made of any suitable material such as a plastic, wood, fibre board or the like.

In figure 1 it can be seen that a plurality of numerical sequences 14 are displayed on the surface of the body 10. The numerical sequences are arranged in a radial fashion such that each sequence starts proximate the centre of the surface and the numerals in the sequence are ordered radially outward towards the periphery of the surface. In this embodiment, the lowest numeral in each sequence is located closest to the centre of the surface such that the values of the numerals increase towards the outer edge of the surface. However it will be appreciated that the direction of the sequence could be reversed such that the sequence flows in a radially inward direction.

In this embodiment each sequence represents a times table. A total of ten sequences are shown representing the times tables for the numbers one to ten. The first number of each times table is located in a central circle 16, which can be used to identify each times table. The remaining numbers of each sequence radiate outwardly from the centre of the circular surface in a straight line along a radius of the circle.

Each radial sequence 14 is ten numbers long. However it will be appreciated that the length of the sequence can be lengthened or shortened to suit the number of sequences displayed. Typically the length of each sequence will match the number of sequences displayed on the surface of the disc 12. For example, if twelve times tables are shown, then the each sequence would typically be twelve numbers in length.

A zero is marked at the centre of the surface although this is not considered to be part of each sequence in this example.

Each sequence 14 is spaced from an adjacent radial sequence by an equal angular spacing. Thus the sequences are evenly distributed about the centre of the circle. In this example, where ten sequences are shown, each sequence is spaced from an adjacent sequence by approximately 36°.

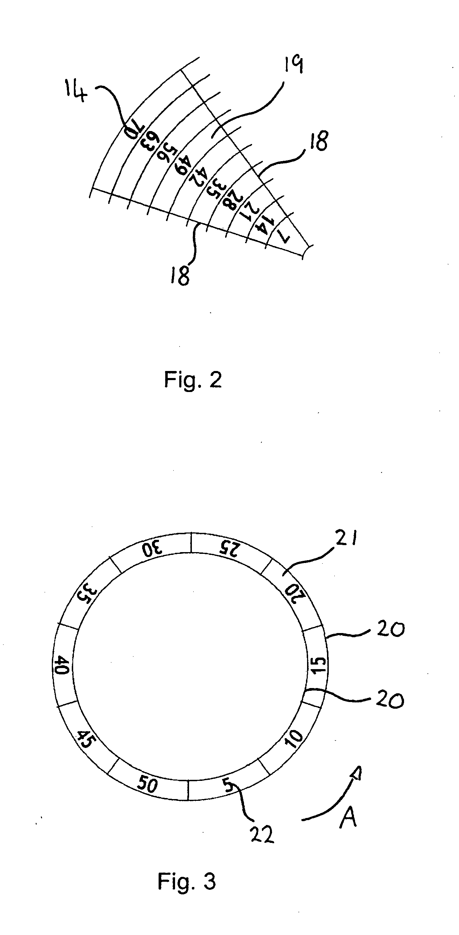

Radial delineations 18 are marked on the surface between sequences 14 and take the form of straight lines. The radial delineations 18 define a series of areas in the form of adjoining circular sections. Each sequence is contained with one sector 19 as can be seen in figure 2, in which a single sector 19 has been isolated. This has the benefit that the radial sequences are simple to follow.

The start point and radial spacing between each number in a sequence is the same for all radial sequences 14. Thus each number of a sequence is radially spaced from the centre of the surface by the same distance as an equivalent number in the other radial sequences displayed on the surface. For example, the third number of all the radial sequences displayed on the surface all lie on a common circumferential line of fixed radius.

A series of annular or circumferential delineations 20 are provided to define a series of ring-shaped areas. The ring-shaped areas radiate outward from the centre of the surface in a concentric fashion. Each concentric area contains one number from each radial sequence 14.

One ring-shaped area 21 is shown in figure 3. It can be seen that the numbers from each radial sequence contained within the area 21 define an annular numeral sequence which flows in the direction of arrow A. In this example, the fifth annular ring has been selected from the body 12 and contains the numbers of the five times table. Thus it will be appreciated that each radial sequence 14 shown in figure 1 is repeated in an annular sequence 22 on the same surface.

The various areas bounded by delineations 18 and 20 may be coloured. A background colour may be applied to an area such that any numerals are clearly discernable from the background colour. Typically one area displays a different colour to another area. In one embodiment, each radial area 19 has a different colour such that the surface of the apparatus is divided into a series of differently coloured wedge shapes. In an alternative embodiment, each annular area 21 has a different colour such that the surface comprises a series of coloured rings. In this way coloured areas may be used to help a user differentiate between different sequences, such that each radial or annular sequence may have a prescribed colour.

An example colour sequence for ten areas may comprise the colours white, yellow, green, blue, mauve, purple, turquoise or cyan, magenta, orange and viridian or asparagus.

In one embodiment, the lines 18 and/or 20 may be removed, such that at least some adjoining areas are delineated by the boundaries of areas of different colours.

The numerical sequences shown on one major surface of the body 12 are typically repeated on the opposing side of the body. However the numbering on the adjacent or opposing side may differ from that on the first side. The delineations and/or colouring of the areas may be identical on each side or else may differ between the sides. For example the colouring on one side may be applied to different wedge-shaped sections whilst the colouring on the opposing side may be applied to annular areas.

In a preferred embodiment, a colour used to denote one area on a first side of the body is used to denote a different area on the opposing side. In particular, a colour may be used for an area enclosing one numerical sequence on the first side of the body and that same colour may be used to denote the same numerical sequence on the other side of the body. However the sequence may be coloured in a wedge shaped area on the first side and in a ring-shaped area on the second side. Thus the colour acts as a reference between corresponding sequences on opposing sides of the body.

Whilst the present invention is particularly suited to use as an aid for teaching or recalling times tables, the present invention is not limited to such use. The numeral sequences shown may be replaced with any numeral sequences which may be displayed in a linear and global fashion simultaneously. For example the apparatus may be used to display numbers of a higher register, such as times tables for numbers from eleven to twenty or else from twenty-one to thirty. For any register, the relationships of the number sequence will be displayed in a concomitant manner.

The number of sequences which can be displayed on the wheel is not restricted to ten and any number of series can be incorporated, limited only by the practicality that the numbers must be legible on the surface of the apparatus. Any series of numbers may be fed into the calculus and will produce results consistent with the factors fed in.

Additionally, the numerals need not be integers and may comprise decimals or fractions. For example the body may be used to display sequences relating to multiplication, division, addition and/or subtraction. In one example, the body may used to display sequences for which the function relating the numbers in the sequence is more complicated, such that the apparatus can be used to replace mathematical tables. Such embodiments may comprise numerical sequences of fractions, prime numbers, logarithms, exponentials, squares or square roots, factorials, numbers in one or more bases (typically in bases other than base ten) or any other sequences for which a function can be used to calculate entries in a sequence.

However it will be appreciated that a sequence need not require a mathematical relationship between individual numerals within the sequence and may comprise an array, collection or set of numerals for which they is no linking formula. Furthermore it is intended that the term 'numeral' as used within the present application encompasses any two dimensional or three dimensional symbol or formation denoting a number or numerical value. Such numerals include, for example, Arabic numerals, Roman numerals, Chinese numerals, Braille numerical characters and/or numerals of any other known number identification system.

In one example, the apparatus may be provided by way of a mathematical problem, such that the user is required to determined the function linking the numbers of the one or more sequences.

Numerals or lines may be provided on the body by printing or else by application of a display layer, such as for example an adhesive paper or card layer with the numerals and/or line displayed thereon. Additionally, or else alternatively, the numerals may be formed within the body itself such as by way sunken or engraved numerals or else by raised or embossed numerals.

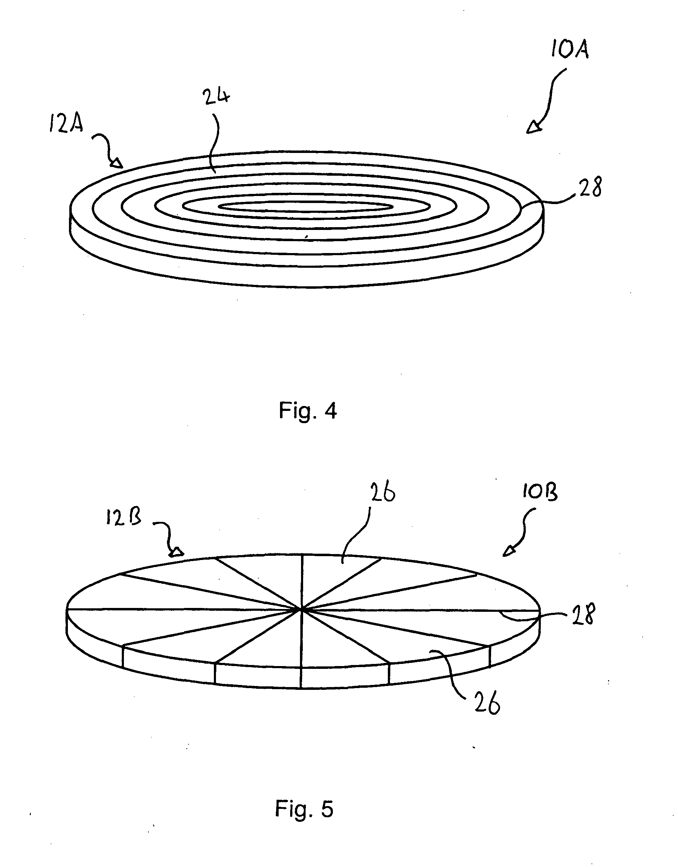

Turning now to figures 4 and 5, two embodiments of the apparatus 10 are shown as 10A and 10B. The numbers and lines have been removed for clarity such that figures 4 and 5 show only the basic structural features of the apparatus.

In figure 4, the apparatus 10A is formed of a series of concentric rings 24, which fit closely so, in combination, they provide the planar body 12A. The number of rings 24 typically corresponds to the number of annular numerical sequences 22 displayed on the body. This allows individual rings to be removed and replaced from the body so as to allow handling and/or visual inspection of individual annular numerical sequences.

In figure 5, the apparatus 10B is formed of a series of wedge-shaped sections 26 which fit together to form the planar body 12B. The number of wedge sections 26 typically corresponds to the number of radial numerical sequences 14 displayed on the body. This allows individual wedges to be removed and replaced from the body so as to allow handling and/or visual inspection of individual radial numerical sequences.

In either embodiment of figure 4 or 5, the individual removable sections are typically loosely aligned without the requirement for attachment means between each section. The individual sections can fit together closely such that each section abuts against an adjacent section along at least one edge thereof. Thus the lines of separation 28 are simple discontinuities or cut lines between each section.

The alternative features of any of the above described embodiments are intended to be interchangeable with either of the embodiments of figures 4 or 5. Thus colouring one side of either apparatus 10A or 10B may be applied to either a concentric ring areas or else to wedge-shaped areas. The colouring on a reverse side may be the same or different as required.

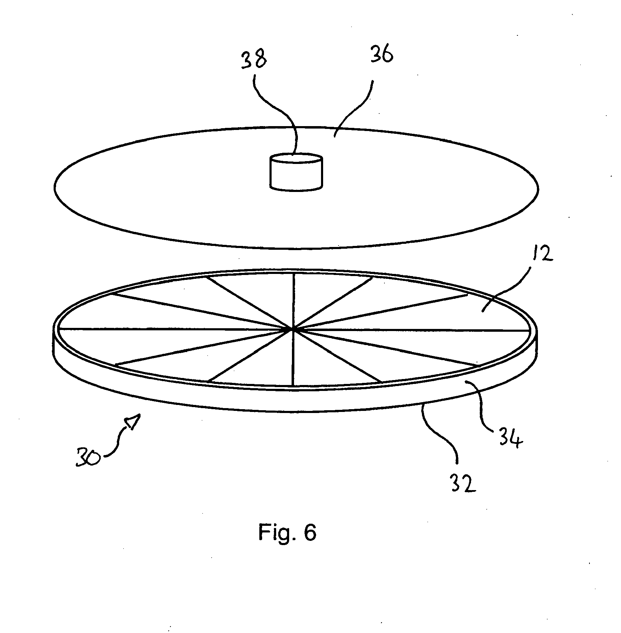

Turning now to figure 6, there is shown a housing 30 for the body 12. The housing 30 may comprise a simple open tray having a base 32 and one or more side walls 34 arranged to maintain the planar shape of the body 12. The shape of the base and side walls is designed to closely fit about the body 12 once formed.

Also shown in figure 6 is a lid portion 36 which is attachable to or else positionable against the side wall 34 so as to substantially enclose the body within the housing. The lid 36 may be rotatable relative to the base 32 or else may be fixable relative thereto in a predetermined orientation.

The housing is typically formed of a transparent or semi-transparent material such as a Perspex or else another plastic material, although the housing may also be formed of an opaque material.

In the embodiment shown, the lid 36 has a handle portion in the form of a hub 38 which can be gripped by a user to rotate the lid relative to the body 12. The body is of the segmented type described above and the lid acts as a transparent plastic overlay, having markings the same size as the segments (36 degrees), and can be slid over the body to overlap with a required segment of the body 12.

The lid or overlay 36 may have indicia or formulae relating to numeral sequences on the surface of the body 12. The indicia are arranged such that when the overlay 36 is aligned correctly with the body 12, the indicia appear slightly to one side of the numerals on the body segments 19. In addition, the overlay may have further indicia such as numerals 1-10 or else a description such as "10 times table" slightly to the other side. Thus when the overlay is correctly positioned on the body, it helps provide further information to the user.

In the example of the ten times table, the indicia may comprise the characters "1x10", "2x10", "3x10", etc which are arranged to appear alongside the respective numerals "10", "20" and "30" on the body. This provides an aid to a new user of the apparatus and may assist in learning applications. For more complicated applications, the overlay may provide useful information for interpreting the sequence values.

One embodiment of the use of the overlay 36 is proposed for a small scale apparatus, which can easily be carried by user, for example in a pocket or else by hand.

Whilst a circular body represents a preferred embodiment of the present invention, it will be appreciated that other shapes are possible, such as, for example, an ellipse, an oblong or else a polygon. If the body is polygonal in plan, the number of sides will typically be selected to match the number of numerical sequences displayed on its surface. For example, a decagon will typically be used for the display of ten radial sequences.

The terms "radial" and "annular" as used within the present application are intended to cover the arrangement of numeral sequences, delineations and/or areas provided on a circular or non-circular body. In particular, the term "annular" is intended to cover numeral sequences, delineations and/or areas which extend about a mid-point of the surface within an outer boundary defined by the peripheral edge of the body.

## Claims

1. Mathematical apparatus (10) for the dissemination of numerical sequences, said apparatus comprising:
a substantially planar body (12) having a plurality of numerals on a first surface thereof, said numerals being positioned and oriented so as to define a plurality of radial numerical sequences (14), the numerals in each radial sequence extending from a point within said surface towards a peripheral edge of said surface,
wherein the numerals within each radial sequence (14) are aligned with the numerals in an adjacent radial sequence (14) so as to define a plurality of concentric annular numerical sequences (22) arranged about said point on said surface, **characterised in that**
each radial numerical sequence (14) is also displayed as an annular numerical sequence (22) on said surface.

2. Mathematical apparatus according to claim 1, wherein the planar body (12) is formed of a plurality of body members (24, 26) which may be assembled in a coplanar arrangement to form said body (12).

3. Mathematical apparatus according to claim 2, wherein the body members (26) are wedge shaped.

4. Mathematical apparatus according to claim 2, wherein the body members (24) comprise a plurality of concentric rings.

5. Mathematical apparatus according to any one of claims 2 to 4, wherein each body member (24, 26) has a single sequence of numerals on one face thereof.

6. Mathematical apparatus according to any one of claims 2 to 5, wherein the body members (24, 26) are individually removable from the body such that the body is disbandable.

7. Mathematical apparatus according to any preceding claim, wherein the body (12) comprises a plurality of annular and/or radial delineations (18, 20) on said first surface.

8. Mathematical apparatus according to claim 7, wherein radial delineations (18) are interposed between adjacent radial numeral sequences (14).

9. Mathematical apparatus according to claim 7, wherein annular delineations (20) are interposed between adjacent annular numeral sequences (22).

10. Mathematical apparatus according to any one of claims 7to 9, wherein the delineations (18, 20) define a series of adjoining areas on said surface, each of said areas being filled with a colour which differs from the colour of an adjacent area.

11. Mathematical apparatus according to any preceding claim, wherein the body (12) comprises a second surface having a plurality of numerals thereon, said numerals being positioned and oriented so as to define a plurality of radial numerical sequences, the numerals in each radial sequence extending from a point within said second surface towards a peripheral edge of said second surface,
wherein the numerals within each radial sequence of said second surface are aligned with the numerals in an adjacent radial sequence on said second surface so as to define a plurality of concentric annular numerical sequences arranged about said point on said second surface.

12. Mathematical apparatus according to claim 11, wherein the first surface comprises a plurality of annular delineations and the second surface comprises a plurality of radial delineations.

13. Mathematical apparatus according to any preceding claim, comprising a housing (30) in which the body is received, said housing having a base (32) and a side wall (34) depending therefrom and being shaped to closely surround and at least partially enclose said body therein.

14. Mathematical apparatus according to any preceding claim, further comprising a transparent overlay portion (36) which is positionable over at least a portion of said first surface, the overlay having indicia thereon oriented and positioned so as to correspond with at least one sequence of numerals on said body surface.

15. Mathematical apparatus according to any preceding claim, wherein each numeral of the radial and annular sequences of numerals is determinable from the adjacent numeral in said sequence by an algorithm.

16. Mathematical apparatus according to any preceding claim, wherein the radial and annular sequences of numerals comprise multiplication tables.

17. Mathematical apparatus according to any preceding claim, wherein the body (12) is disc shaped.

18. Mathematical apparatus according to any preceding claim, wherein the body is disc shaped.

19. Mathematical apparatus for the display of numerical relationships, said apparatus comprising:
a substantially planar assembly having a plurality of circumferential delineations defining a series of concentric rings on at least a first major surface thereof; and,
a plurality of radial delineations defining a series of wedge shapes on said surface,
the combined circumferential and radial delineations defining a plurality of adjoining areas on said surface, wherein each adjoining area has a numeral therein, said numerals defining at least one radially aligned numerical sequence and one circumferentially aligned numerical sequence,
and wherein either of the circumferential or radial delineations comprise a discontinuity between adjacent ring or wedge sections respectively such that individual rings or wedges are removable from the assembly.

## Patentansprüche

1. Mathematische Vorrichtung (10) zur Verbreitung von Zahlenfolgen, wobei die Vorrichtung Folgendes umfasst:
einen im Wesentlichen ebenen Körper (12), der mehrere Zahlen auf einer ersten Oberfläche desselben hat, wobei die Zahlen so angeordnet und ausgerichtet sind, dass sie mehrere radiale Zahlenfolgen (14) definieren, wobei sich die Zahlen in jeder radialen Folge von einem Punkt innerhalb der Oberfläche zu einem umlaufenden Rand der Oberfläche hin erstrecken,
wobei die Zahlen innerhalb jeder radialen Folge (14) so mit den Zahlen in einer benachbarten radialen Folge (14) ausgerichtet sind, dass sie mehrere konzentrische ringförmige Zahlenfolgen (22) definieren, die um den Punkt auf der Oberfläche angeordnet sind, **dadurch gekennzeichnet, dass**
jede radiale Zahlenfolge (14) ebenfalls als eine ringförmige Zahlenfolge (22) auf der Oberfläche angezeigt wird.

2. Mathematische Vorrichtung nach Anspruch 1, wobei der ebene Körper (12) aus mehreren Körperelemente (24, 26) geformt ist, die in einer komplanaren Anordnung zusammengebaut werden können, um den Körper (12) zu bilden.

3. Mathematische Vorrichtung nach Anspruch 2, wobei die Körperelemente (26) keilförmig sind.

4. Mathematische Vorrichtung nach Anspruch 2, wobei die Körperelemente (24) mehrere konzentrische Ringe umfassen.

5. Mathematische Vorrichtung nach einem der Ansprüche 2 bis 4, wobei jedes Körperelement (24, 26) eine einzige Folge von Zahlen auf einer Fläche desselben hat.

6. Mathematische Vorrichtung nach einem der Ansprüche 2 bis 5, wobei die Körperelemente (24, 26) einzeln von dem Körper abnehmbar sind derart, dass der Körper auflösbar ist.

7. Mathematische Vorrichtung nach einem der vorhergehenden Ansprüche, wobei der Körper (12) mehrere ringförmige und/oder radiale Abgrenzungen (18, 20) auf der ersten Oberfläche umfasst.

8. Mathematische Vorrichtung nach Anspruch 7, wobei die radialen Abgrenzungen (18) zwischen benachbarten radialen Zahlenfolgen (14) angeordnet sind.

9. Mathematische Vorrichtung nach Anspruch 7, wobei die ringförmigen Abgrenzungen (20) zwischen benachbarten ringförmigen Zahlenfolgen (22) angeordnet sind.

10. Mathematische Vorrichtung nach einem der Ansprüche 7 bis 9, wobei die Abgrenzungen (18, 20) eine Reihe von nebeneinanderliegenden Bereichen auf der Oberfläche definieren, wobei jeder dieser Bereiche mit einer Farbe ausgefüllt ist, die sich von der Farbe eines benachbarten Bereichs unterscheidet.

11. Mathematische Vorrichtung nach einem der vorhergehenden Ansprüche, wobei der Körper (12) eine zweite Oberfläche umfasst, die mehrere Zahlen auf derselben hat, wobei die Zahlen so angeordnet und ausgerichtet sind, dass sie mehrere radiale Zahlenfolgen definieren, wobei sich die Zahlen in jeder radialen Folge von einem Punkt innerhalb der zweiten Oberfläche zu einem umlaufenden Rand der zweiten Oberfläche hin erstrecken,
wobei die Zahlen innerhalb jeder radialen Folge der zweiten Oberfläche so mit den Zahlen in einer benachbarten radialen Folge auf der zweiten Oberfläche ausgerichtet sind, dass sie mehrere konzentrische ringförmige Zahlenfolgen definieren, die um den Punkt auf der zweiten Oberfläche angeordnet sind.

12. Mathematische Vorrichtung nach Anspruch 11, wobei die erste Oberfläche mehrere ringförmige Abgrenzungen umfasst und die zweite Oberfläche mehrere radiale Abgrenzungen umfasst.

13. Mathematische Vorrichtung nach einem der vorhergehenden Ansprüche, die ein Gehäuse (30) umfasst, in dem der Körper aufgenommen wird, wobei das Gehäuse eine Basis (32) und eine an demselben hängende Seitenwand (34) hat und dafür geformt ist, den Körper eng zu umgeben und wenigstens teilweise in demselben einzuschließen.

14. Mathematische Vorrichtung nach einem der vorhergehenden Ansprüche, die ferner einen transparenten Auflageabschnitt (36) umfasst, der über wenigstens einem Abschnitt der ersten Oberfläche angeordnet werden kann, wobei die Auflage Kennzeichnungen auf derselben hat, die so ausgerichtet und angeordnet sind, dass sie wenigstens einer Folge von Zahlen auf der Körperoberfläche entsprechen.

15. Mathematische Vorrichtung nach einem der vorhergehenden Ansprüche, wobei jede Zahl der radialen und der ringförmigen Folgen von Zahlen durch einen Algorithmus aus der benachbarten Zahl in der Folge bestimmbar ist.

16. Mathematische Vorrichtung nach einem der vorhergehenden Ansprüche, wobei die radialen und die ringförmigen Folgen von Zahlen Multiplikationstabellen umfassen.

17. Mathematische Vorrichtung nach einem der vorhergehenden Ansprüche, wobei der Körper (12) scheibenförmig ist.

18. Mathematische Vorrichtung nach einem der vorhergehenden Ansprüche, wobei der Körper scheibenförmig ist.

19. Mathematische Vorrichtung zur Anzeige von Zahlenbeziehungen, wobei die Vorrichtung Folgendes umfasst:
eine im Wesentlichen ebene Baugruppe, die mehrere umlaufende Abgrenzungen hat, die eine Reihe von konzentrischen Ringen definieren, auf wenigstens einer ersten Hauptoberfläche derselben hat, und
mehrere radiale Abgrenzungen, die eine Reihe von Keilformen auf der Oberfläche definieren,
wobei die kombinierten umlaufenden und radialen Abgrenzungen mehrere nebeneinanderliegende Bereiche auf der Oberfläche definieren, wobei jeder nebeneinanderliegende Bereich eine Zahl in demselben hat, wobei die Zahlen wenigstens eine in Radialrichtung ausgerichtete Zahlenfolge und eine in Umfangsrichtung ausgerichtete Zahlenfolge definieren,
und wobei entweder die umlaufenden oder die radialen Abgrenzungen jeweils eine Unterbrechung zwischen benachbarten Ring- oder Keilsektionen umfassen derart, dass einzelne Ringe oder Keile von der Baugruppe abnehmbar sind.

## Revendications

1. Appareil mathématique (10) pour la dissémination de séquences numériques, ledit appareil comprenant :
un corps essentiellement plan (12), comportant plusieurs chiffres sur sa première surface, lesdits chiffres étant positionnés et orientés de sorte à définir plusieurs séquences numériques radiales (4), les chiffres dans chaque séquence radiale s'étendant à partir d'un point dans ladite surface vers un bord périphérique de ladite surface ;
dans lequel les chiffres dans chaque séquence radiale (14) sont alignés avec les chiffres dans une séquence radiale adjacente (14), de sorte à définir plusieurs séquences numériques annulaires concentriques (22) agencées autour dudit point sur ladite surface, **caractérisé en ce que**
chaque séquence numérique radiale (14) est également affichée sous forme d'une séquence numérique annulaire (22) sur ladite surface.

2. Appareil mathématique selon la revendication 1, dans lequel le corps plan (12) est formé à partir de plusieurs éléments de corps (24, 26) pouvant être assemblés dans un agencement coplanaire pour former ledit corps (12).

3. Appareil mathématique selon la revendication 2, dans lequel les éléments de corps (26) ont une forme en coin.

4. Appareil mathématique selon la revendication 2, dans lequel les éléments de corps (24) comprennent plusieurs anneaux concentriques.

5. Appareil mathématique selon l'une quelconque des revendications 2 à 4, dans lequel chaque élément de corps (24, 26) comporte une seule séquence de chiffres sur une de ses faces.

6. Appareil mathématique selon l'une quelconque des revendications 2 à 5, dans lequel les éléments de corps (24, 26) peuvent être retirés individuellement du corps de sorte que le corps peut être démantelé.

7. Appareil mathématique selon l'une quelconque des revendications précédentes, dans lequel le corps (12) comprend plusieurs délimitations annulaires et/ou radiales (18, 20) sur ladite première surface.

8. Appareil mathématique selon la revendication 7, dans lequel des délimitations radiales (18) sont interposées entre des séquences numériques radiales adjacentes (14).

9. Appareil mathématique selon la revendication 7, dans lequel des délimitations annulaires (20) sont interposées entre des séquences numériques annulaires adjacentes (22).

10. Appareil mathématique selon l'une quelconque des revendications 7 à 9, dans lequel les délimitations (18, 20) définissent une série de zones contiguës sur ladite surface, chacune desdites zones étant remplie d'une couleur différente de la couleur d'une zone adjacente.

11. Appareil mathématique selon l'une quelconque des revendications précédentes, dans lequel le corps (12) comprend une deuxième surface comportant plusieurs chiffres, lesdits chiffres étant positionnés et orientés de sorte à définir plusieurs séquences numériques radiales, les chiffres dans chaque séquence radiale s'étendant à partir d'un point dans ladite deuxième surface vers un bord périphérique de ladite deuxième surface ;
dans lequel les chiffres dans chaque séquence radiale de ladite deuxième surface sont alignés avec les chiffres dans une séquence radiale adjacente sur ladite deuxième surface, de sorte à définir plusieurs séquences numériques annulaires concentriques agencées autour dudit point sur ladite deuxième surface.

12. Appareil mathématique selon la revendication 11, dans lequel la première surface comprend plusieurs délimitations annulaires, la deuxième surface comprenant plusieurs délimitations radiales.

13. Appareil mathématique selon l'une quelconque des revendications précédentes, comprenant un boîtier (30) recevant le corps, ledit boîtier comportant une base (32) et une paroi latérale (34) s'étendant à partir de celle-ci et formée de sorte à entourer étroitement et à renfermer au moins en partie ledit corps.

14. Appareil mathématique selon l'une quelconque des revendications précédentes, comprenant en outre une partie de recouvrement transparente (36) pouvant être positionnée au-dessus d'au moins une partie de ladite première surface, le recouvrement comportant des indices orientés et positionnés de sorte à correspondre à au moins une séquence de chiffres sur ladite surface du corps.

15. Appareil mathématique selon l'une quelconque des revendications précédentes, dans lequel chaque chiffre des séquences de chiffres radiales et annulaires peut être déterminé sur la base du chiffre adjacent dans ladite séquence par un algorithme.

16. Appareil mathématique selon l'une quelconque des revendications précédentes, dans lequel les séquences de chiffres radiales et annulaires comprennent des tables de multiplication.

17. Appareil mathématique selon l'une quelconque des revendications précédentes, dans lequel le corps (12) a une forme en disque.

18. Appareil mathématique selon l'une quelconque des revendications précédetnes, dans lequel le corps a une forme en disque.

19. Appareil mathématique pour l'affichage de relations numériques, ledit appareil comprenant :
un assemblage essentiellement plan, comportant plusieurs délimitations circonférentielles définissant une série d'anneaux concentriques sur au moins une première surface majeure de celui-ci ; et
plusieurs délimitations radiales, définissant une série de formes en coin sur ladite surface ;
les délimitations circonférentielles et radiales combinées définissant plusieurs zones contiguës sur ladite surface, chaque zone adjacente contenant un chiffre, lesdits chiffres définissant au moins une séquence numérique à alignement radial et une séquence numérique à alignement circonférentiel ;
et dans lequel les délimitations circonférentielles ou les délimitations radiales comprennent respectivement une discontinuité entre les sections annulaires ou en coin adjacentes, de sorte que les anneaux ou les coins individuels peuvent être retirés de l'assemblage.
